Europäisches Patentamt

**European Patent Office**

**Office européen des brevets**

(19)

(11) Veröffentlichungsnummer: **0 180 768**
**B1**

(12)

# EUROPÄISCHE PATENTSCHRIFT

(45) Veröffentlichungstag der Patentschrift:
**04.01.89**

(21) Anmeldenummer: **85112505.4**

(22) Anmeldetag: **03.10.85**

(51) Int. Cl.⁴: **B 01 D 27/08**

(54) Flüssigkeitsfilter, insbesondere für Kraftstoff.

(30) Priorität: **09.11.84 DE 3440992**

(43) Veröffentlichungstag der Anmeldung:
**14.05.86 Patentblatt 86/20**

(45) Bekanntmachung des Hinweises auf die Patenterteilung:
**04.01.89 Patentblatt 89/1**

(84) Benannte Vertragsstaaten:
**DE FR GB IT**

(56) Entgegenhaltungen:
**DE-A-2 547 857**

(73) Patentinhaber: **ROBERT BOSCH GMBH, Postfach 50, D-7000 Stuttgart 1 (DE)**

(72) Erfinder: **Bosch, Franz- Ulrich, Edurad- Steinle- Strasse 36, D-7000 Stuttgart 75 (DE)**
Erfinder: **Müller, Willi, Wiesenstrasse 38, D-7247 Sulz- Sigm. (DE)**
Erfinder: **Piwonka, Fridolin, Dr., Brächterstrasse 36, D-7146 Tamm (DE)**
Erfinder: **Schacht, Hans, Leharstrasse 12, D-7000 Stuttgart 1 (DE)**
Erfinder: **Straubel, Max, Dr., Ontariostrasse 30B, D-7000 Stuttgart 61 (DE)**

EP 0 180 768 B1

## Beschreibung

### Stand der Technik

Die Erfindung geht aus von einem Flüssigkeitsfilter für Kraftstoff nach der Gattung des Hauptanspruchs. Es ist schon ein solches Filter aus der DE-OS-2 547 857 bekannt, bei dem ein Wickelfilterelement in einem Gehäuse angeordnet ist, das aus einem becherformigen Gehäuseteil und einem zugeordneten Gehäusedeckel besteht. Hierbei verden mit einer einzigen, das Filterelement ringförmig umspannenden Klebestelle sowohl die beiden Gehäuseteile miteinander verbunden als auch Schmutz- und Reinseite im Gehäuse voneinander getrennt. Eine zusätzliche Verankerung ergibt sich dadurch, daß eine Randzone des Gehäuseteils über eine erste und eine zweite Schulter aufgeweitet und mit ihrem Rand am Gehäusedeckel verbördelt ist. Obwohl bei diesem Flüssigkeitsfilter nur eine einzige Klebestelle für zwei Funktionen vorgesehen ist, hat diese Bauart doch den Nachteil, daß sich hier der Deckel mit seinem Rand unmittelbar an der zweiten Schulter der Randzone im Bereich der Klebestelle abstützt. Der in die Klebestelle hineinragende Rand des Deckels bildet dadurch zwei voneinander getrennte, mit Klebstoff gefüllte Kammern. Dies begünstigt bei dem im Betrieb auftretenden Quellen und Schrumpfen des Heißschmelzklebers Ablösungen und Haarrisse, wodurch zwischen Schmutz- und Reinseite Leckstellen auftreten können. Nachteilig ist ferner daß die Wandstärke des Deckels am Rand wesentlich stärker ist als die Wanddicke des Gehäuseteils, so daß unterschiedliche Ausgangsmaterialien notwendig sind. Als ungünstig kann sich ferner erweisen, daß der Rand des Deckels die mit Klebstoff gefüllten Räume zwischen dem Wickelelement und dem Gehäuseteil einschließt; bei am Gehäuseteil anschlagendem Deckel muß der Klebstoff die verfügbaren Räume genau ausfüllen. Es besteht daher die Gefahr einer Überdosierung von Klebstoff, was zu einem Zusetzen von Filterfläche bzw. zu einem radialen Zusammenpressen des Filterelements führen kann. Der stark konische Boden des Gehäuseteils erfordert außerdem viel Raum.

Ferner ist aus der DE-OS-3 226 808 ein Flüssigkeitsfilter in Leitungsfilterbauart bekannt, bei dem ein Wickelelement in ein topfförmiges Gehäuseteil eingesetzt ist, welches durch einen Deckel verschlossen wird. Durch ausreichende Spaltkammerung des Klebstoffs an der Dichtstelle zwischen Wickelelement und Gehäuseteil ist dafür gesorgt daß diese Dichtstelle auch aggressiven Kraftstoffen wie z. B. Methanol möglichst lange standhält. Von Nachteil bei diesem Flüssigkeitsfilter ist aber, daß hier eine zusätzliche Abstandsscheibe mit Doppel-T-Querschnitt zwischen Filterelement und Deckel notwendig ist. Zudem ist zwischen Deckel und Gehäuseteil eine zweite Dichtstelle nach außen hin erforderlich. Dies führt zu einer bezüglich Kosten und Bauraum relativ aufwendigeren Lösung.

### Vorteile der Erfindung

Das erfindungsgemäße Flüssigkeitfilter mit den kennzeichnenden Merkmalen des Hauptanspruchs hat demgegenüber den Vorteil, daß es unter Vermeidung der erwähnten Nachteile eine preisgunstige Leitungsfilterbauart ermöglicht, welche bei kleinstem Bauraum eine relativ große Filterfläche aufweist und auch gegenüber aggressiven Kraftstoffen eine hohe Lebensdauer erreicht. Das Flüssigkeitsfilter begünstigt zudem eine einfache, kompakte und billige Bauweise. Die mit dem Quellen und Schrumpfen des Klebstoffs verbundenen Probleme lassen sich sicherer beherrschen.

Durch die in den Unteransprüchen aufgeführten Maßnahmen sind vorteilhafte Weiterbildungen und Verbesserungen des im Hauptanspruch angegebenen Flüssigkeitsfilters möglich.

### Zeichnung

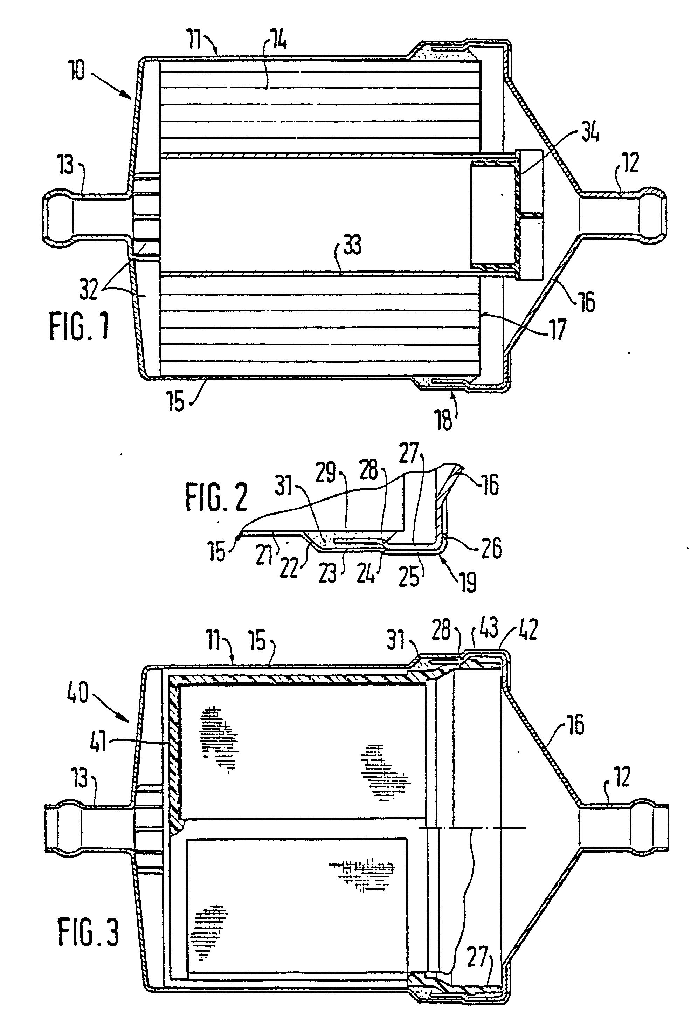

Zwei Ausführungsbeispiele der Erfindung sind in der Zeichnung dargestellt und in der nachfolgenden Beschreibung näher erläutert Die Figur 1 zeigt einen Längsschnitt durch ein erstes Ausführungsbeispiel des Flüssigkeitsfilters mit einem Wickelfiltereinsatz, Figur 2 eine Einzelheit nach Figur 1 in vergrößertem Maßstab und Figur 3 einen Längsschnitt durch eine zweite Ausführungsform mit Siebzylindereinsatz.

### Beschreibung der Ausführungsbeispiele

Die Figur 1 zeigt ein Flüssigkeitsfilter 10, das als Leitungsfilter ausgebildet ist und in einem metallischen Gehäuse 11 mit zwei Anschlüssen 12, 13 für Einlaß und Auslaß einen axial durchströmten, als Wickel ausgebildeten Filtereinsatz 14 aufnimmt.

Das Gehäuse 11 besteht aus einem im wesentlichen becherförmigen Gehäuseteil 15 und einem Deckel 16, die beide aus Aluminium bestehen und an denen die Anschlüsse für Einlaß (12) bzw. Auslaß (13) jeweils als Schlauchanschlußstutzen zentrisch ausgebildet sind. Nahe einer zuflußseitigen Stirnseite 17 ist am Umfang des Wickelfilterelements 14 eine ringförmige Klebestelle 18 ausgebildet, welche im Gehäuse 11 Schmutz- und Reinseite voneinander trennt und zugleich zwischen Gehäuseteil 15 und Deckel 16 nach außen hin abdichtet.

Die Ausbildung des Flüssigkeitsfilters 10 im Bereich der Klebestelle 18 ist besonders deutlich aus Figur 2 erkennbar. Das Gehäuseteil 15 geht im Bereich einer dem Deckel 16 zugewandten Randzone 19 aus einem hohlzylindrischen Abschnitt 21, an welchem das Wickelfilterelement 14 anliegt, über eine erste Schulter 22 in einen mittleren, aufgeweiteten Abschnitt 23 über. Der mittlere Abschnitt 23 geht seinerseits über eine als Anschlag dienende zweite Schulter 24 in einen äußeren Abschnitt 25 über, der in einem äußeren, umgebogenen und mit Deckel 16 verbördelten Rand 26 ausläuft. Der mittlere Abschnitt 23 ist mit Hilfe der ersten Schulter 22 so stark aufgeweitet, daß sein Abstand vom Wickelfilterelement 14 ein Mehrfaches der Wanddicke des Gehäuseteils 15 in der Randzone 19 beträgt. Die erste Schulter 22 ist daher wesentlich breiter ausgebildet als die als Anschlag dienende zweite Schulter 24.

Der in das Gehäuseteil 15 eingesetzte Deckel 16 weist einen zylindrischen Deckelabschnitt 27 auf, mit dem er im äußeren Abschnitt 25 des Gehäuseteiles 15 geführt ist. Dieser Deckelabschnitt 27 geht über eine Außenschulter 28 in einen frei auskragenden Ringabschnitt 29 über, der sowohl im Abstand vom Umfang des Wickelfilterelements 14 als auch vom mittleren Abschnitt 23 verläuft. Der Deckel 16 stützt sich mit seiner Außenschulter 28 an der zweiten Schulter 24 des Gehäuseteils 15 ab und bildet damit einen Anschlag für beide Bauelemente. Der Deckel 16 ist somit durch den Anschlag 24, 28 sowie den umgebördelten Rand 26 in Längsrichtung des Flüssigkeitsfilters 10 fest mit dem Gehäuseteil 15 verbunden. Der Ringabschnitt 29 endet in einigem Abstand von der ersten Schulter 22, so daß durch ihn zwischen Wickelfilterelement 14, erste Schulter 22 und mittleren Abschnitt 23 ein im Querschnitt U-förmiger Ringraum 31 ausgebildet ist, der nahe der Stirnseite 17 um den Umfang des Filterelements 14 herum verläuft und der mit einem Heißschmelzkleber ausgefüllt ist, welcher die Klebestelle 18 bildet. Durch diese Klebestelle 18 ist sowohl der Wickelfiltereinsatz 14 im Gehäuse 11 als auch die beiden Gehäuseelemente 15, 16 zueinander abgedichtet. Der im Querschnitt U-förmige Ringraum 31 ergibt für den Heißschmelzkleber eine ausgezeichnete Spaltkammerung sowohl in axialer als auch in radialer Richtung, wodurch eine gegen aggressive Kraftstoffe widerstandsfähige Klebestelle erreicht wird. Der frei in den Ringraum 31 ragende Ringabschnitt 29 kann nun weniger Kräfte in die Klebestelle 18 einleiten und ist somit Schwingungen weniger stark ausgesetzt, was Ablöseerscheinungen des Klebstoffs vorteilhaft entgegenwirkt.

Das Wickelfilterelement 14 stützt sich ablaufseitig an gehäusefesten, sternförmig angeordneten Rippen 32 ab. Der Boden des Gehäuseteils 15 wird dadurch versteift und kann daher relativ flach und dünn ausgebildet werden. Ein Mittelrohr 33 im Wickelfilterelement 14 ist zuflußseitig durch einen Kunststoffstopfen 34 verschlossen.

Das Flüssigkeitsfilter 10 läßt sich in besonders einfacher und rationeller Weise herstellen. Zuerst wird das Wickelfilterelement 14 nahe seiner Stirnseite 17 längs des Umfangs mit einer Kleberraupe aus Heißschmelzkleber versehen, die in an sich bekannter Weise auf eine vorgegebene Form gepreßt wird. Das so vorbereitete Wickelfilterelement 14 wird anschließend in an sich bekannter Weise in das becherförmige Gehäuse 15 eingesumpft, wobei unter Wärmeeinwirkung der Klebstoffwulst außen teilweise anschmilzt und wobei das Wickelfilterelement 14 an den Rippen 32 zur Anlage kommt. Gleichzeitig mit dem Einsumpfen des Wickelfilterelements 14 wird der Deckel 16 im Gehäuseteil 15 bis auf seinen Anschlag eingesetzt und der Rand 26 umgebördelt. Dabei dringt der Ringabschnitt 29 in den teilweise geschmolzenen Heißschmelzkleber ein und führt nach dessen Abkühlung und gleichzeitigem Erstarren zu einer innigen und festen Verbindung zwischen den Gehäuseelementen 15, 16. Ein Anlösen des Heißschmelzklebers infolge des Methanol-Kraftstoffgemisches ist in diesem Verband durch die gute axiale und radiale Kammerung weitestgehend ausgeschaltet, so daß insbesondere eine gute Abdichtung nach außen und zwischen Schmutz- und Reinseite erreicht wird. Das Flüssigkeitsfilter 10 läßt sich somit in wenigen Verfahrensschritten preisgünstig herstellen, wobei durch die einzige Klebestelle 18 für zwei Dichtfunktionen der Aufwand gering gehalten wird und bei kleinstmöglichem Bauraum eine große Filterfläche untergebracht werden kann. Das Gehäuseteil 15 kann dabei in vorteilhafter Weise als Fließpreßteil ausgebildet werden, das mit seinem relativ flachen Boden eine raumsparende Filterbauweise ermöglicht.

Die Figur 3 zeigt ein zweites Flüssigkeitsfilter 40, das sich von demjenigen nach Figur 1 wie folgt unterscheidet, wobei für gleiche Bauelemente gleiche Bezugszeichen verwendet werden.

Das baugleiche Gehäuse 11 nimmt in seinem Innern anstelle eines Wickelfilterelements nunmehr einen Siebzylindereinsatz 41 auf. Dieser topfförmig ausgebildete Siebzylindereinsatz 41 hat an seinem offenen Ende ein ringförmiges, aufgeweitetes und verdicktes Randteil 42, das einen außenliegenden Ringwulst 43 aufweist. Der Deckel 16 übergreift mit seinem zylindrischen Deckelabschnitt 27 das Randteil 42 derart, daß seine Außenschulter 28 zusammen mit dem Ringwulst 43 eine in Längsrichtung förmschlüssige Verbindung herstellt, wobei der teilweise am Randteil 42 anliegende Ringabschnitt 29 die beiden Bauelemente 16 und 41 zueinander zentriert. Der Ringabschnitt 29 des Deckels 16 überragt das Randteil 42 in einer Weise, daß wiederum ein im Querschnitt U-förmiger Ringraum 31 ausgebildet ist, der mit Heißschmelzkleber gefüllt ist.

Das zweite Flüssigkeitsfilter 40 läßt sich in ähnlich einfacher Weise herstellen wie das erste Flüssigkeitsfilter 10. Beim zweiten Flüssigkeitsfilter 40 wird zuerst der Siebzylindereinsatz 41 in den Deckel 16 eingepreßt. Anschließend wird in entsprechender Weise am Randteil 42 längs des Umfangs eine ringförmige Raupe aus Heißschmelzkleber aufgebracht und vorgeformt. Anschließend wird der so vorbearbeitete Siebzylindereinsatz 41 im Gehäuseteil 15 in an sich bekannter Weise unter Wärmeeinwirkung eingesumpft und gleichzeitig der Rand 26 verbördelt.

Der am Anschluß 12 zufließende Kraftstoff kann den Siebzylindereinsatz 40 an seinen zylindrischen Wänden sowohl radial als auch an seinem Boden axial durchströmen und gelangt gereinigt zum Anschluß 13.

Selbstverständlich sind Änderungen an den gezeigten Ausführungsformen möglich. So können am umgebördelten Rand 26 als zusätzliche Verdrehsicherung zwischen Gehäuseteil 15 und Deckel 16 kleine Rippen im Deckel 16 vorgesehen werden, wodurch beim Einbördeln des Deckels 16 im Rippenbereich Kaltschweißzonen entstehen.

**Patentansprüche**

1. Flüssigkeitsfilter, insbesondere für Kraftstoff, mit einem metallischen Gehäuse (11), das aus einem becherförmigen Gehäuseteil (15) und einem damit fest verbundenen, am offenen Ende des Gehäuseteils angeordneten Deckel (16) besteht und mit einem Filtereinsatz (14) im Gehäuse, an dessen entgegenesetzten Stirnseiten jeweils ein Anschluß für Einlaß (12) und Auslaß (13) ausgebildet sind sowie mit einer Schmutz- und Reinseite im Gehäuse voneinander trennenden, den Filtereinsatz ringförmig umspannenden Klebestelle (18), die zugleich zwischen Gehäuseteil und Deckel nach außen hin abdichtet, und bei welchem Gehäuseteil die dem Deckel zugewandte Randzone (19) über eine erste Schulter (22) in einen mittleren, aufgeweiteten Abschnitt (23) übergeht, der seinerseits über eine zweite Schulter (24), die mit dem Deckel einen Anschlag bildet, in einen äußeren Abschnitt (25) übergeht, in welchem der Deckel mit einem zylindrischen Deckelabschnitt (27) geführt ist, wobei der äußere Abschnitt an seinem Rand (26) mit dem Deckel verbördelt ist, dadurch gekennzeichnet, daß der zylindrische Deckelabschnitt (27) über eine Außenschulter (28) in einen frei auskragenden Ringabschnitt (29) übergeht, daß die Außenschulter (28) mit der zweiten Schulter (24) den Anschlag zwischen Gehäuseteil (15) und Deckel (16) bildet und daß der Ringabschnitt (29) so in die Klebestelle (18) ragt, daß diese einen U-förmigen Querschnitt (31) aufweist.

2. Flüssigkeitsfilter nach Anspruch 1, dadurch gekennzeichnet, daß die Klebestelle (18) sich im wesentlichen im Bereich des mittleren, aufgeweiteten Abschnitts (23) erstreckt.

3. Flüssigkeitsfilter nach Anspruch 1 oder 2, dadurch gekennzeichnet, daß der Anschlag (24, 28) und die erste Schulter (22) die Klebestelle (18) in Längsrichtung des Filters (10, 40) begrenzen.

4. Flüssigkeitsfilter nach einem oder mehreren der Ansprüche 1 bis 3, dadurch gekennzeichnet, daß die radiale Aufweitung der Randzone durch die erste Schulter (22) wesentlich größer ist als diejenige durch die zweite Schulter (24) und insbesondere ein Mehrfaches der Wanddicke des Ringabschnittes (29) beträgt.

5. Flussigkeitsfilter nach einem oder mehreren der Ansprüche 1 bis 4, dadurch gekennzeichnet, daß das Gehäuseteil (16) ein axial durchströmtes Wickelfilterelement (14) aufnimmt.

6. Flüssigkeitsfilter nach einem oder mehreren der Ansprüche 1 bis 4, dadurch gekennzeichnet, daß das Gehäuseteil (15) einen radial und/oder axial durchströmten Siebzylindereinsatz (41) aufweist, der an seinem ringförmigen, verdickten Randteil (42) einen außenliegenden Ringwulst (43) aufweist, der zusammen mit der Außenschulter (28) und dem auskragenden Ringabschnitt (29) eine formschlüssige Verbindung zwischen Siebzylindereinsatz (41) und Deckel (16) bildet.

7. Flüssigkeitsfilter nach einem oder mehreren der Ansprüche 1 bis 6, dadurch gekennzeichnet daß das Filterelement (14, 41) am Boden des Gehäuseteils (15) durch sternförmig angeordnete Rippen (32) abgestützt ist.

8. Flüssigkeitsfilter nach einem der Ansprüche 1 bis 7, dadurch gekennzeichnet, daß am Deckel als Verdrehsicherung dienende Rippen angeordnet sind.

9. Flüssigkeitsfilter nach Anspruch 7, dadurch gekennzeichnet, daß das Gehäuseteil (15) ein Fließpreßteil, insbesondere aus Aluminium, ist, bei dem die Rippen (32) am Boden des Gehäuseteils (15) integriert sind und daß der Boden mindestens nahezu eben ausgebildet ist.

**Claims**

1. Liquid filter, especially for fuel, having a metal housing (11) which comprises a cup-shaped housing part (15) and a lid (16) arranged at the open end of the housing part and fixedly connected thereto, and having a filter insert (14) in the housing at whose opposite end faces a connection for inlet (12) and outlet (13) are respectively formed, and having an adhesive joint (18) which separates the contaminated side and clean side in the housing from each other and encompasses the filter insert annularly, this adhesive joint (18) at the same time providing an external seal between the housing part and the lid, and in which housing part the edge zone (19) facing the lid undergoes a transition via a first shoulder (22) into a central, widened section (23), which in turn undergoes a transition via a second shoulder (24), which forms a stop with the lid, into an outer section (25), in which the lid is guided with a cylindrical lid sect ion (27), the outer section being flanged at its edge (26) to the lid, characterized in that the cylindrical lid section (27) undergoes a transition via an outer shoulder (28) into a freely projecting annular section (29) in that the outer shoulder (28) with the second shoulder (24) forms the stop between the housing part (15) and the lid (16) and in that the annular section (29) projects into the adhesive joint (18) in such a way that the latter possesses a U-shaped cross-section (31).

2. Liquid filter according to Claim 1, characterized in that the adhesive joint (18) extends substantially in the region of the central, widened section (23).

3. Liquid filter according to Claim 1 or 2, characterized in that the stop (24, 28) and the first shoulder (22) limit the adhesive joint (18) in the longitudinal direction of the filter (10, 40).

4. Liquid filter according to one or more of Claims 1 to 3, characterized in that the radial widening of the edge zone by the first shoulder (22) is substantially greater than that by the second shoulder (24) and in particular is a multiple of the wall thickness of the annular section (29).

5. Liquid filter according to one or more of Claims 1 to 4, characterized in that the housing part (16) receives a roll-type filter element (14) through which an axial flow passes.

6. Liquid filter according to one or more of Claims 1 to 4, characterized in that the housing part (15) possesses a perforated cylinder insert (41) through which a radial and/or axial flow passes, and which possesses on its annular, thickened edge part (42) an external annular beading (43) which, together with the outer shoulder (28) and the projecting annular section (29), forms a positive connection between the perforated cylinder insert (41) and the lid (16).

7. Liquid filter according to one or more of Claims 1 to 6, characterized in that the filter element (14, 41) is supported on the base of the housing part (15) by ribs (32) arranged in a star formation.

8. Liquid filter according to one of Claims 1 to 7, characterized in that ribs serving as protection against twisting are arranged on the lid.

9. Liquid filter according to Claim 7, characterized in that the housing part (15) is a flow moulding, particularly of aluminium, in which the ribs (32) are integrated at the base of the housing part (15) and in that the base is of at least virtually flat design.

**Revendications**

1. Filtre pour liquides, en particulier pour carburant, avec un carter (11) métallique, qui se compose d'une partie de carter (15) en forme de godet et d'un couvercle (16) disposé de manière fixe par rapport à celui-ci, à l'extrémité ouverte de la partie de carter et avec une garniture de filtre dans le carter, sur chacun des côtés frontaux opposés de laquelle est réalisé un raccordement pour l'admission (12) et l'évacuation (13), ainsi qu'avec une zone de collage (18) enserrant la garniture de filtre sous une forme annulaire, séparant l'un de l'autre dans le carter le côté encrassé du côté propre, zone de collage qui fait étanchéité en même temps vers l'extérieur, entre partie de carter de couvercle, et la zone de bordure (19) tournée vers le couvercle, se transforme pour cette partie de carter en une section (23) médiane agrandie, en passant par un premier épaulement (22), section (23) qui se transforme de son côté en une section extérieure (25), en passant par un deuxième épaulement (24), qui forme une butée avec le couvercle, section (25) dans laquelle le couvercle est guidé par une section de couvercle (27) cylindrique, la section extérieur étant à cette occasion rebordée au couvercle sur son bord (26), caractérisé en ce que la section de couvercle (27) cylindrique se transforme en une section annulaire (29) émergeant librement, en passant par un épaulement extérieur (28), en ce que l'épaulement extérieur (28) forme avec le deuxième épaulement (24) la butée entre partie de carter (15) et couvercle (16) et en ce que la section annulaire (29) émerge de telle sorte sur la zone de collage (18), que celle-ci présente une section (31) en forme de U.

2. Filtre pour liquide selon la revendication 1, caractérisé en ce que la zone de collage (18) s'étend principalement au voisinage de la section (23) médiane élargie.

3. Filtre pour liquide selon la revendication 1 ou 2, caractérisé en ce que la butée (24, 28) et le premier épaulement (22) limitent la zone de collage (18) dans la direction longitudinale du filtre (10, 40).

4. Filtre pour liquide selon une ou plusieurs des revendications 1 à 3, caractérisé en ce que l'élargissement radial de la zone de bordure est notablement plus important du fait du premier épaulement (22), que celui dû au deuxième épaulement (24) et est en particulier un multiple de l'épaisseur de paroi de la section annulaire (29).

5. Filtre pour liquide selon une ou plusieurs des revendications 1 à 4, caractérisé en ce que la partie de carter (16) reçoit un élément de filtre enroulé (14) sujet à un écoulement traversant axial.

6. Filtre pour liquide selon une ou plusieurs des revendications 1 à 4, caractérisé en ce que la partie de carter (15) présente une garniture à tamis cylindrique (41) à écoulement traversant radial et/ ou axial, garniture qui présente un bourrelet annulaire (43) situé à l'extrémité sur la partie de bordure (42) de forme annulaire épaissie, qui forme une liaison à interpénétration de forme entre garniture à tamis cylindrique (41) et couvercle (16), avec épaulement extérieur (28) et la section annulaire (29) saillante.

7. Filtre pour liquide selon une ou plusieurs des revendications 1 à 6, caractérisé en ce que l'élément de filtre (14, 41) est appuyé sur le fond de la partie de carter (15), au moyen de nervures (32) disposées en étoile.

8. Filtre pour liquide selon l'une des revendications 1 à 7, caractérisé en ce que des nervures servant de sécurité de rotation sont disposées sur le couvercle.

9. Filtre pour liquide selon la revendication 7, caractérisé en ce que la partie de carter (15) est une partie d'extrusion, en particulier en aluminium, dans laquelle les nervures (32) sont intégrées au fond de la partie de carter (15) et en ce que le fond est réalisé de manière au moins approximativement plane.

FIG. 1

FIG. 2

FIG. 3